# EUROPEAN PATENT APPLICATION

(11) **EP 3 693 516 A1**
(43) Date of publication of application: **12.08.2020**
(21) Application number: 19155680.2
(22) Date of filing: 06.02.2019
(51) Int. Cl.: E03F 1/00, E03B 11/14

(54) **RAINWATER STORAGE AND INFILTRATION FACILITY**

(71) Applicant: Tensho Electric Industries Co., Ltd., Machida-shi, Tokyo 194-0005 (JP)
(72) Inventor: Yuki, Kazuhisa, Hiki-gun Saitama 350-0142 (JP)
(74) Representative: Andrejewski - Honke Patent- und Rechtsanwälte Partnerschaft mbB

(57) **Abstract**

[Problem]

To maintain the strength of rainwater storage/infiltration facility even though reducing the number of the unit members to be used per unit area so that the void space ratio of the rainwater storage space is increase, and to form many inspection ports penetrating in the vertical direction in order to facilitate the inspection work of the rainwater storage/infiltration facility.

[Means for Solving the Problem]

The unit member (A) is consisted of a square flat plate (31) with a given thickness and hollow legs (32, 33) in the truncated cone shape being opened to the contact surfaces (34) formed on the four corners and the flat plate (31). The contact surface (34) is provided with the engaging convex portion (35) and the engaging concave portion (36) for mutually connecting with an other unit member (A). Place the engaging convex portion (35) of one unit member (A) and the engaging concave portion (36) of the other unit member (A) facing each other to make a pair of unit members, and a given numbers of the pair of unit members are assembled in the horizontal and vertical directions to construct the rainwater storage/infiltration facility. Since the contact surface (34) has a step thereon, load can be supported by virtue of the step of the two lateral sides of the contact surfaces.

## Description

### [Field of Invention]

This invention relates to a rainwater storage/infiltration facility that provides storage space for rainwater by placing a number of unit members under the ground and in both the horizontal and vertical directions. More specifically, this invention relates to a rainwater storage/infiltration facility that has made possible to reduce the number of the unit members to be used per unit space to thereby allow to increase the void space ratio of rainwater storage space and to build a number of inspection ports that penetrate in the vertical direction from the bottom to the ground surface so that the inspection of the rainwater storage/infiltration facility may be facilitated.

### [Background Art]

The rainwater storage/infiltration facility is placed in the underground of the public facilities, such as roads, parks, parking lots, etc., and is structured by stacking a number of unit members molded with a plastic material or the like in the horizontal and vertical directions. The surrounding of the unit members is covered with water-permeable sheets and water-proof sheets, and rain water is pooled in the interior void space of the rainwater storage/infiltration facility. Various structural configurations have been developed so as to be used as the structural members for supporting load in the vertical direction. For the rainwater storage/infiltration facility of this type, the one having greater void space ratio of the rainwater storage space is preferable since it can pool greater volume of rainwater. Furthermore, the rainwater storage/infiltration facility, the internal inspection of which and removal of earth and sand inside the facility are easier, is desirable since earth and sand, etc. accumulate inside the facility during the use for a long time.

In the rainwater storage/infiltration facility specified in Patent reference 1 and Patent reference 2, the unit members for constituting the facility are placed in both horizontal and vertical directions and in close contact manner, and the unit members are connected each other with fitting members. Therefore, the weight per unit volume is increased and the void space ratio of the rainwater storage space decreases, which has made difficult to lower the cost of the material.

In the rainwater storage/infiltration facility specified in Patent Reference 3, the unit members are placed at a certain distance apart from each other, and the corner portions of four adjacent unit members are connected by means of joint members. Furthermore, the weight per unit space is reduced by covering the ceiling part of said four adjacent unit members with a ceiling material, and the inspection work for the rainwater storage/infiltration facility is made easier by forming the inspection hole that penetrates underground in the vertical direction. However, since the rainwater storage/infiltration facility of Patent Reference 3 has drawback of requiring joint members for connecting the adjacent unit members, which makes the increased number of necessary parts, and another drawback of difficulty to make the volume of the rainwater storage space larger because further stacking of the unit members over the ceiling material is difficult.

### [Prior Art]

### [Patent Reference]

[Patent Reference 1] Japanese Patent Publication Gazette No. Hei-10-252108
[Patent Reference 2] Japanese Patent Publication Gazette No. 2002-309658
[Patent Reference 3] Japanese Patent Publication Gazette No. 2010-48010

### [Summary of the Invention]

### [Problem to be solved by the Invention]

This invention is accomplished in the background as described above and it achieves the following object.

The object of this invention is to increase the void space ratio of the rainwater storage space by reducing the number of necessary unit members per unit space and to provide the rainwater storage/infiltration facility with high strength in the connection between unit members.

It is another object of this invention to provide the rainwater storage/infiltration facility, the inspection work of which is facilitated by enabling to form the inspection ports that penetrate in the vertical direction and at many or arbitrary positions.

### [Means for solving the Problem]

This invention adopts the following constitution in order to solve the aforementioned problem.

Namely, the rainwater storage/infiltration facility according to this invention 1 is;
built by assembling and placing a plurality of unit members under the ground in both horizontal and vertical directions to form the rainwater storage space,
said unit member is characterized by comprising;
either square or rectangular flat plate with a given thickness,
connecting portions formed on the four corners of one side of the flat plate and provided with contact surfaces adapted to be connected to the connecting portions on the four corners of the flat plate of the other unit members, and
hollow legs each in a cylindrical shape, those which are integrally formed with the flat plate at four corners thereof and are projecting to the other side of the flat plate and opened to said one side.

The rainwater storage/infiltration facility according to this invention 2 is characterized in that, in this invention 1, said contact surfaces are rectangular concave bottom surfaces each having been formed thin in the thickness to half the thickness of said flat plate and extending from said one side to said other side, and two sides adapted to contact to lateral sides of any of the four corners of the flat plate of the other unit member.

The rainwater storage/infiltration facility according to this invention 3 is characterized in that, in this invention 2, said connecting portion is provided with an engaging portion and an engaged portion for engaging with the connecting portions of the other unit member, the tip portions of the legs positioning at the diagonal positions of said flat plate are formed as convex and concave portions adapted to connect to the legs of the other unit member, and the leg is formed in a circular or a truncated pyramid shape, the diameter of which is gradually reduced from said one side to the other side.

The rainwater storage/infiltration facility according to this invention 4 is characterized in that, in this invention 3, said convex portions and said concave portions of the legs are connected respectively to compose a pair of unit members, and the engaging portions, the engaged portions and the contact surfaces of said pair of unit members and the other pair of unit members are engaged respectively to assemble the unit members and subsequently place them underground in both horizontal and vertical directions so that the rainwater storage space is established.

The rainwater storage/infiltration facility according to this invention 5 is characterized in that, in this invention 4, is embedded in the covered soil laid over the upper side of the unit members group at the top stage, and hollow structures, those which connect the upper portion of the inspection port, formed between the flat plates of the adjacent unit members positioning at the top stage, with the ground surface so that the inspection camera can be inserted into the inspection port, are provided.

The rainwater storage/infiltration facility according to this invention 6 is characterized in that, in this invention 4, the inspection manhole is provided by removing the unit members in the vertical direction to thereby form cylinder-shaped space extending from the upper side of the unit members group positioning at the top stage to the ground surface is provided.

### [Advantageous Effect of the Invention]

With the rainwater storage/infiltration facility according to this invention, the manufacturing cost is lowered because the number of the necessary unit members per unit space can be reduced and rainwater storage volume is increased by virtue of the improvement in the void space ratio of the rainwater storage space. In addition, the connection of the unit member and the other unit member is stabilized since the joint surfaces of the connecting portion that joint two pairs of unit members are jointed with three joint surfaces and the joint strength is made so high. Furthermore, the facility inspection work can be facilitated since the formation of a number of the inspection ports passing through in the vertical direction can be made possible on the arbitrary positions.

### [Brief Explanation of the Drawings]

Fig. 1 is a perspective view of the entire rainwater storage/infiltration facility according to this invention.
Fig. 2 is a perspective view showing the cover members for shielding the unit members group at the first stage of the rainwater storage/infiltration facility shown in Fig. 1 and the void space underneath the said unit members group.
Fig. 3 is a perspective view showing the unit members group at the second stage of the rainwater storage/infiltration facility shown in Fig. 1 and the lateral side cover members for shielding the lateral void space of the said unit member group.
Fig. 4 is a perspective view showing the configuration of stacking the second stage unit members group on the first stage unit members group and engaging the both unit members groups and connecting the first stage unit members group and the second stage unit members group in both horizontal and vertical directions.
Fig. 5 is a perspective view showing the third stage unit members group of the rainwater storage/infiltration facility shown in Fig. 1.
Fig. 6 is a perspective view showing the cover members for shielding the void space at the upper side of the rainwater storage/infiltration facility shown in Fig. 1.
Fig. 7 is a perspective view showing the cover members for shielding the inspection ports of the rainwater storage/infiltration facility shown in Fig. 1.
Fig. 8 shows the unit member A constituting the rainwater storage/infiltration facility shown in Fig. 1, Fig. 8(a) is a front view of the unit member A, Fig. 8(b) is a side view of the unit member A shown in Fig. 8(a), and Fig. 8(c) is a cross section of the unit member A shown in Fig. 8(a) cut along the line A-A.
Fig. 9 shows the unit member B constituting the rainwater storage/infiltration facility shown in Fig. 1, Fig. 9(a) is a front view of the unit member B, Fig. 9(b) is a right side view of the unit member B shown in Fig. 9(a), and Fig. 9(c) is a cross section of the unit member B shown in Fig. 9(a) cut along the line B-B.
Fig. 10 shows the unit members C1, C2, both constituting the rainwater storage/infiltration facility shown in Fig. 1, Fig. 10(a) is a front view of the unit member C1, Fig. 10(b) is a right side view of the unit member C1 shown in Fig. 10(a), Fig. 10(c) is a cross section of the unit member C1 shown in Fig. 10(a) cut along the line C-C, Fig. 10(d) is a front view of the unit member C2, Fig. 10(e) is a right side view of the unit member C2 shown in Fig. 10(d), and Fig. 10(f) is a cross section of the unit member C2 shown in Fig. 10(d) cut along the line D-D.
Fig. 11 shows the cover member A constituting the cover members shown in Fig. 6, Fig. 11(a) is a front view of the cover member A, Fig. 11(b) is a right side view of the cover member A shown in Fig. 11(a), and Fig. 11(c) is a cross section of the cover member A shown in Fig. 11(a) cut along the line E-E.
Fig. 12 shows the cover member B constituting the cover member shown in Fig. 6, Fig. 12(a) is a front view of the cover member B, Fig. 12(b) is a right side view of the cover member B shown in Fig. 12(a), and Fig. 12(c) is a cross section of the cover member B shown in Fig. 12(a) cut along the line F-F.
Fig. 13 shows the cover member C constituting the cover member shown in Fig. 6, Fig. 13(a) is a front view of the cover member C, Fig. 13(b) is a right side view of the cover member C shown in Fig. 13(a), and Fig. 13(c) is a cross section of the cover member C shown in Fig. 13(a) cut along the line G-G.
Fig. 14 shows the cover member D for shielding the inspection port shown in Fig. 7, Fig. 14(a) is a front view of the cover member D, Fig. 14(b) is a right side view of the cover member D shown in Fig. 14(a), and Fig. 14(c) is a cross section of the cover member D shown in Fig. 14(a) cut along the line H-H.
Fig. 15 shows the lateral side cover member A, Fig. 15(a) is a front view, Fig. 15(b) is a right side view of the lateral side cover member A shown in Fig. 15(a), and Fig. 15(c) is a plan view of the lateral side cover member A shown in Fig 15(a).
Fig. 16 shows the lateral side cover member B, Fig. 16(a) is a front view, Fig 16(b) is a right side view of the lateral side cover member B shown in Fig. 16(a), and Fig. 16(c) is a plan view of the lateral side cover member B shown in Fig 16(a).
Fig. 17 is a longitudinal cross section of the inspection port which is embedded in the covered soil laid over the rainwater storage/infiltration facility and is exclusively used for the inspection camera.
Fig. 18 is an example of providing the inspection port for inspection man-hole to the rainwater storage/infiltration facility, Fig. 18(a) is a plan view of the top stage of the rainwater storage/infiltration facility cut along the line a-a shown in Fig. 18(b), and Fig. 18(b) is a longitudinal cross section of the vicinity of the inspection port for inspection man-hole.

### [Embodiment for carrying out the Invention]

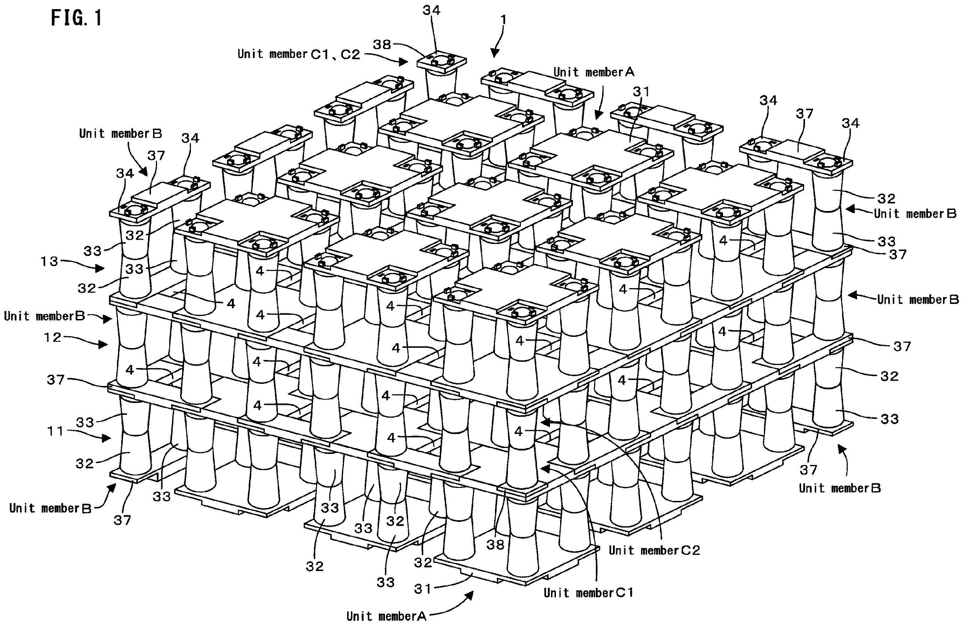

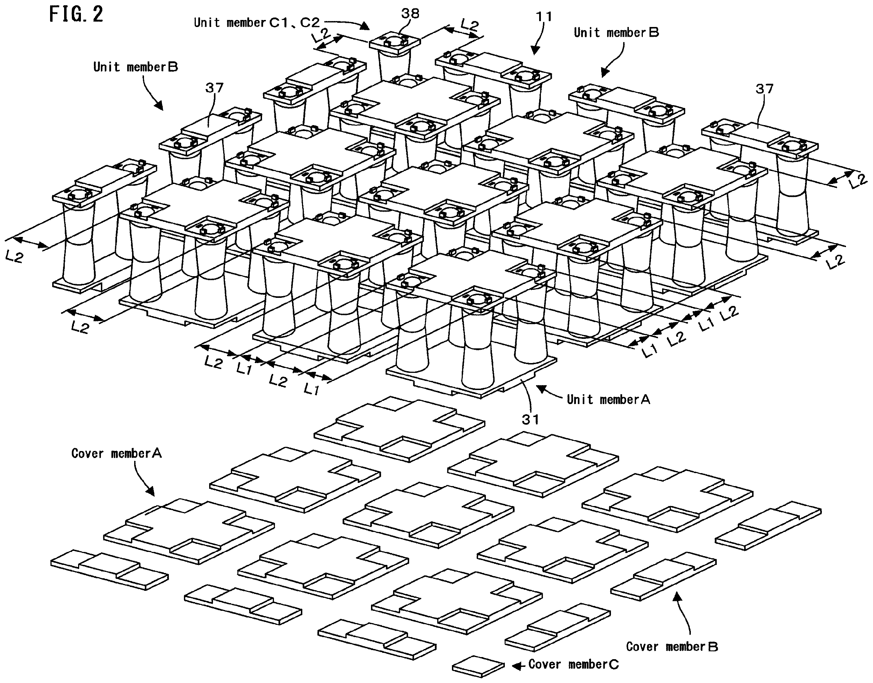

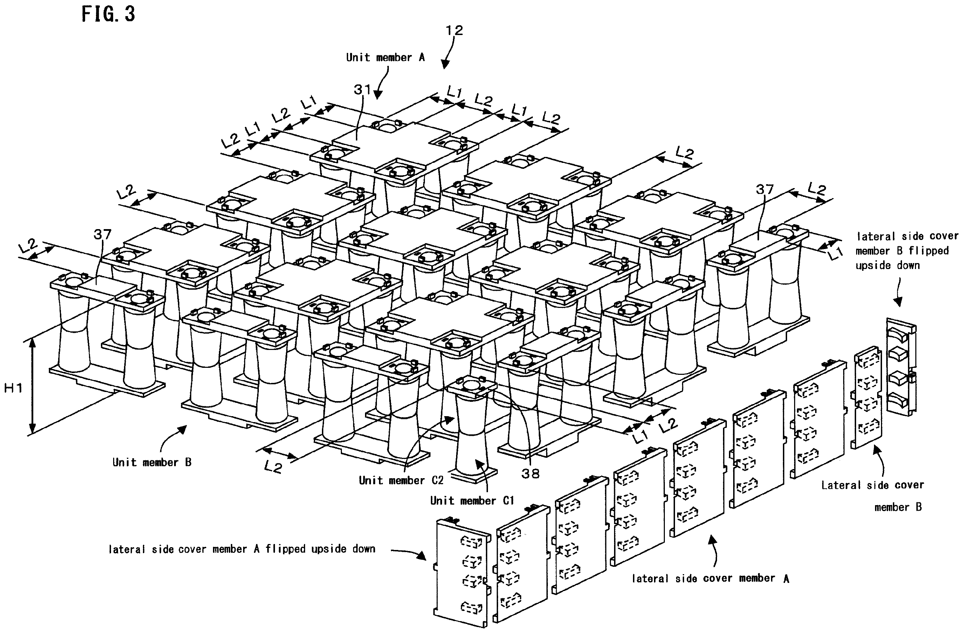

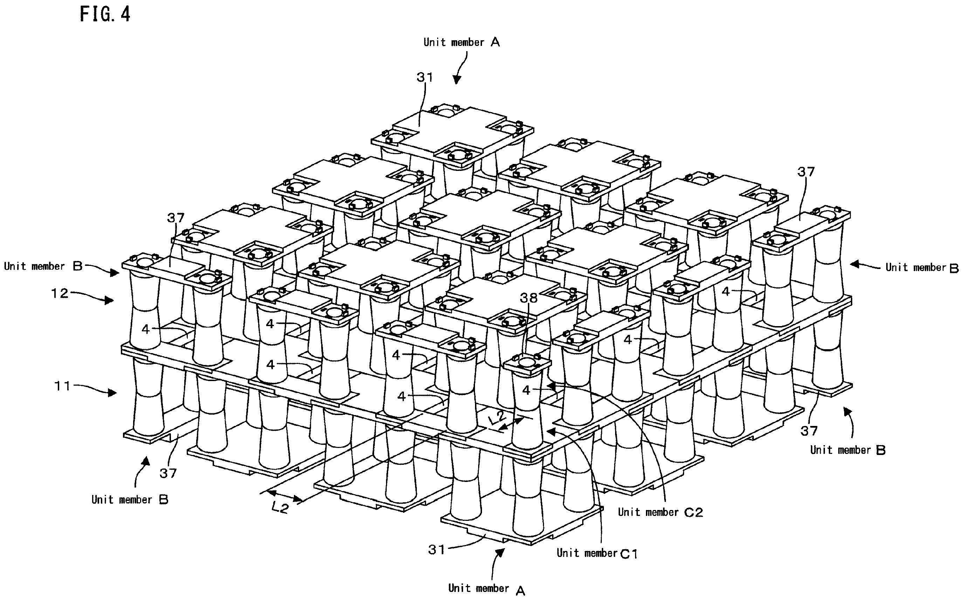

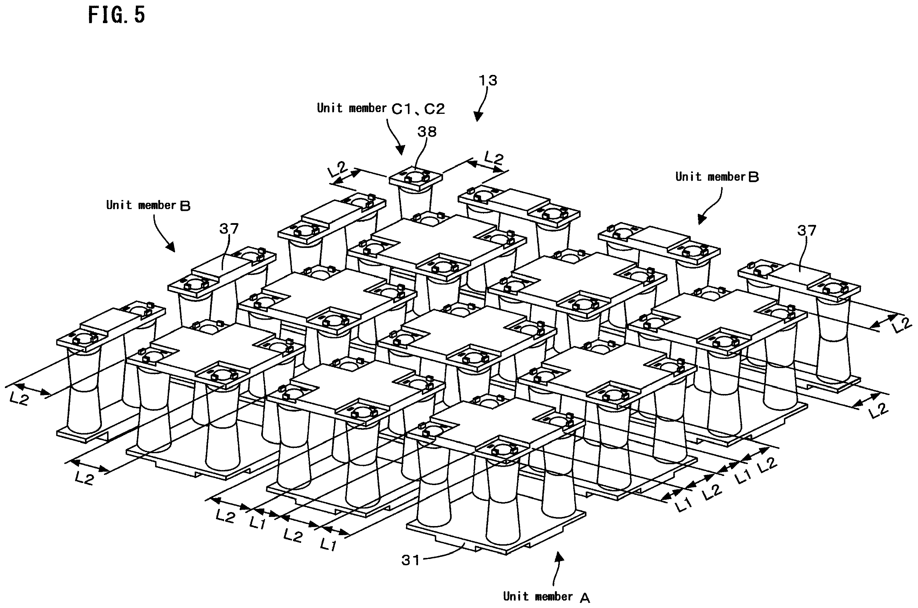

Now, the embodiments for carrying out this invention will be explained hereinbelow with referring to the appended drawings. Fig. 1 is a perspective view of the entire rainwater storage/infiltration facility of this invention, and Fig. 2 is a perspective view showing the cover members for shielding the first stage unit members group of the rainwater storage/infiltration facility and the void space underneath said unit members group. Fig. 3 is a perspective view showing the second stage unit members group of the rainwater storage/infiltration facility shown in Fig. 1, and Fig. 4 is a perspective view showing the configuration of stacking the second stage unit members group on the first stage unit members group to engage them and connecting the first stage unit members group and the second stage unit members group in both horizontal and vertical directions. Fig. 5 is a perspective view showing the third stage unit members group of the rainwater storage/infiltration facility shown in Fig. 1. As shown in Figs. 1 through 5, the rainwater storage/infiltration facility 1 shown in Fig. 1 is assembled and placed in the space formed by digging in the ground, the first stage unit members group 11 shown in Fig. 2, the second stage unit members group 12 shown in Fig. 3 and the third stage unit members group 13 shown in Fig. 5 are stacked and engaged in turn, to thereby structure the first stage, second stage and third stage unit members groups by connecting one to another in both horizontal and vertical directions.

### [Unit Member A]

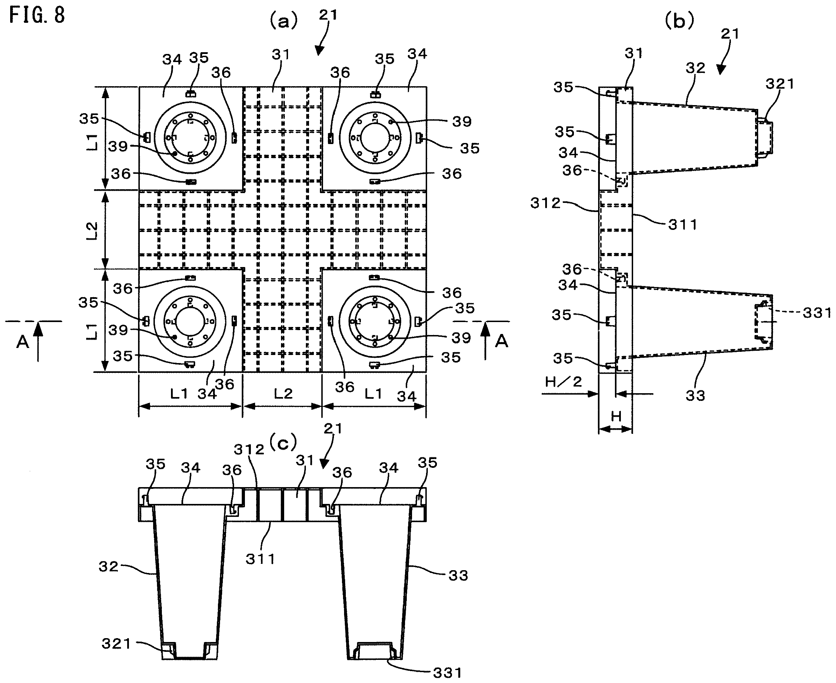

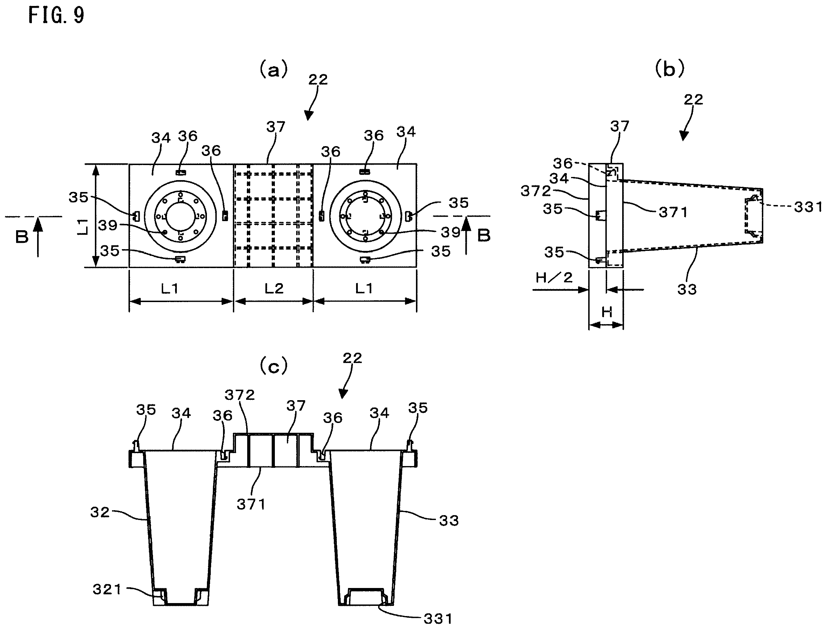

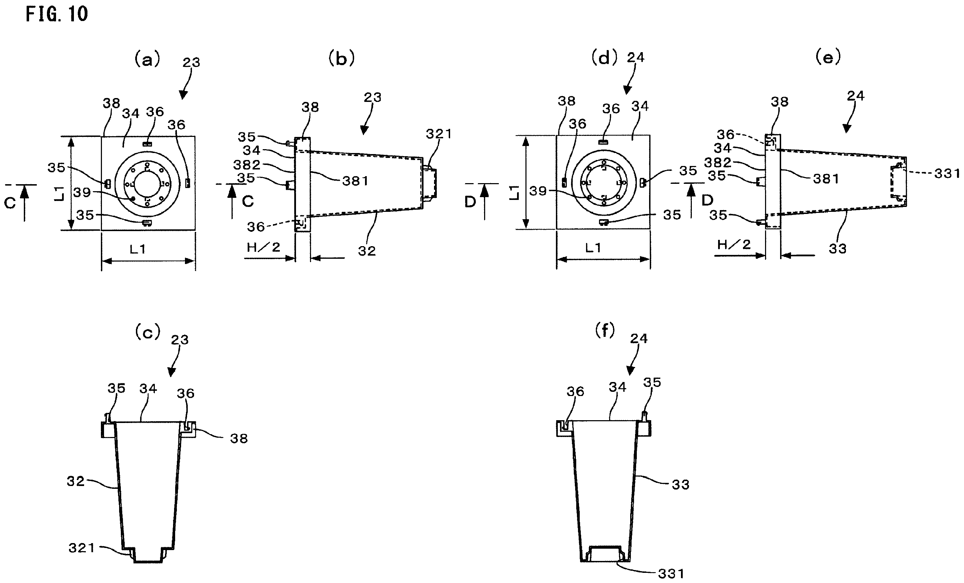

Each of the first stage unit members group 11, the second stage unit members group 12 and the third stage unit member group 13 is consisted of the unit member A 21 shown in Fig. 8, the unit member B 22 shown in Fig. 9, and the unit member C1 23 and the unit member C2 24 shown in Fig. 10. All of the unit member A 21, the unit member B 22, the unit member C1 23 and the unit member C2 24
are molded with a synthetic resin such as polypropylene. As shown in Fig. 8, to the unit member A 21, a square flat plate portion 31 and four hollow cylinder-shaped legs 32, 32, 33, 33 are integrally formed. The legs 32, 32, 33, 33 are integrally formed to the four corners of the flat plate 31 at an equal distance and are protruded toward one side 311 of the flat plate 31 and opened to the other side 312 of said flat plate 31. Each of the legs 32, 32, 33, 33 is formed in a truncated cone shape that the diameter of the leg is gradually reduced as it protrudes from the side 311. The legs 32, 32 are formed on one of the diagonal lines of the flat plane 31 and the legs 33, 33 are formed on the other diagonal line.

The engaging convex portion 321 in a truncated cone shape is formed on each of the projecting ends of the leg 32, 32 and the engaging concave portion 331 in a truncated cone shape capable of engaging with the engaging convex portion 321 is formed on each of the projecting ends of the other legs 33, 33. In each of the projecting ends of the legs 32, 32, 33, 33, eight through holes 39 with a small diameter are formed so that water entered into the hollow cylinder-shaped portions of the legs 32, 32, 33, 33 can escape outside of the legs 32, 32, 33, 33. The projecting ends of the legs 32, 32, 33, 33 of the unit member A 21 are stacked in the vertical direction on the projecting ends of the legs 32, 32, 33, 33 of the other unit member A 21 so that two stage structure of the unit member A is built. Then, by engaging the engaging convex portions 321 on the ends of the legs 32, 32 with the engaging concave portions 331 of the legs 33, 33, a pair of unit member A 21, 21 stacked up and down can be connected in the vertical direction. The connection of the engaging convex portion 321 and the engaging concave portion 331 is favorably made by means of tapered surface bonding of wide area, but not conventional pin connection, because the strength against bending can be enhanced.

On each of the four corners of the flat plate 31 at the other side 312 of the unit member A 21, a contact surface 34 with a side length of L1 being formed in a concave square shape is formed. Note that this concave portion is provided with two lateral sides. The contact surfaces 34 are formed equidistantly on the four corners along the four sides of the flat plate 31 and are dented by half the thickness H of the flat plate 31 on the side 311. When said two lateral sides contact with the contact surfaces 34 of the other unit member A, those lateral sides contact with the corresponding lateral sides at the corners of the other unit member A and work to receive load applied from the lateral direction. Namely, since the contact surface 34 is dented from the other side 312, the mechanical strength of the rainwater storage/infiltration facility assembled by connecting the unit members A is enhanced even though dynamic pressure from the lateral side caused when rainwater flowed in or static pressure due to soil pressure is applied. This is because pressure from the lateral direction is received by virtue of the fitting of the two lateral sides of the rectangular contact surface 34. On the contact surface 34, two engaging portions 35 and two engaged portions 36 are formed. The engaging portion 35 is such a convex portion that it projects from the contact surface 34 to the other side 312 of the flat plate 31, and the engaged portion 36 is such a concave portion that it is opened to the contact surface 34. Said two engaging portions 35 and said two engaged portions 36 are arranged at an angular interval of 90 degrees on the same circumference being concentric with the legs 32, 32, 33, 33. The engaging portion 35 and the engaged portion 36 are formed to face each other on the same diagonal line.

As shown in Fig. 8, the length of one side of the square flat plate 31 is 2L1+L2. It is understood from the description on the unit member A that the unit member A has symmetric structure, the central axis of which is the line extending at right angle against the plane of the flat plate 31. For the assembly of a pair of the unit member A, the engaging convex portions 321 on the projecting ends of the legs 32, 32 of the unit member A are inserted into the engaging concave portions 331 on the projecting ends of the legs 33, 33 of the other unit member A. The basic structure of the rainwater storage/infiltration facility according to this invention is to assemble a pair of unit member A made by assembling two unit member A alternately in the horizontal and vertical directions. The external shape of the pair of unit member A is either square or rectangular. To summarize, the rainwater storage/infiltration facility of this invention is structured by stacking unit members either square or rectangular shape in both horizontal and vertical directions while remaining void space between the unit members. Note that, for a small scale rainwater storage/infiltration facility, such a structure that the unit members are placed without providing the void space may be applicable.

### [Unit Member B]

The main difference between the unit member B 22 shown in Fig. 9 and the above-described unit member A 21 is that only two legs 32, 33 are formed on the unit member B 22. Namely, the unit member B 22 is integrally formed with a rectangular flat plate 37 and two hollow legs 32, 33. When assembling the main unit member A to structure the box-shaped rainwater storage/infiltration facility, gap (clearance) is inevitably created at the corner of the unit member A. The unit members B are used for preventing the creation of such gap from occurring. The legs 32, 33 are integrally formed on the two corners of the flat plate 37, and they are projecting toward one side 371 of the flat plate 37 and are opened to the other side 372 of the flat plate 37. Each of the legs 32, 33 is formed in a truncated cone shape, the interior of which is a cavity with diameter gradually reducing toward the side 371, with a constant thickness. The shape of the legs 32, 33 of the unit member B 22 is identical with the legs 32, 33 of the unit member A 21 except the tip portion.

The engaging convex portion 321 is formed on the projecting end of the leg 32 and the engaging concave portion 331 capable of engaging with the engaging convex portion 321 is formed on the projecting end of the other leg 33. Eight though holes 39 with a narrow diameter are formed on the projecting end of each legs 32, 33 so that water is flowed out form the legs 32, 33. The projecting ends of the legs 32, 33 of the unit member B 22 are laid upward in the vertical direction and the projecting ends of the legs 32, 33 of another unit member B 22 is laid downward in the vertical direction so that the unit members stacked in two stairs are built. Then, by engaging the engaging convex portion 321 of the leg 32 with the engaging concave portion 331 of the leg 33, a pair of upper and lower unit members B 22, 22 can be connected in the vertical direction. On each of two corners at the other side 372 of the flat plate 37 of the unit member B 22, the square contact surfaces 34 having a respective side length of L1 is formed. The contact surface 34 is formed so as to be dented by half the thickness H of the flat plate 37 toward the lateral side 371 (see Fig. 9(b)).

On the contact surface 34, two engaging portions 35 and two engaged portions 36 ate formed. The engaging portion 35 is a convex portion that it projects from the contact surface 34 to the other side 372 of the flat plate 37, and the engaged portion 36 is a concave portion that is opened to the contact surface 34. Said two engaging portions 35 and said two engaged portions 36 are arranged at 90 degree intervals on the same circumference that is concentric with the legs 32, 33. The engaging portion 35 and the engaged portion 36 are formed face to face on the same diagonal line. As shown in Fig. 9, the length of the longer side of the rectangular flat plate 37 is 2 L1+L2, and the length of the shorter side is L1. Namely, the side of the square flat plate 31 of the unit member A 21 and the longer side of the flat plate 37 of the unit member B 22 are formed in an equal length.

### [Unit Member C1, Unit Member C2]

Main difference of the unit member C1 23 and the unit member C2 24 shown in Fig. 10 from the unit member B 22 is that one leg 32 or 33 is formed on each of the unit member C1 23 and the unit member C2 24. That is, a square flat plate 38 having a side length of L1 is provided to each of the unit member C1 23 and the unit member C2 24. When the main unit members are used to build the box-shaped rainwater storage/infiltration facility, gap between the unit members will inevitably arise. Similarly to the unit member B, the unit member C1 and the unit member C2 are used to fill such a gap (clearance) in the corners. The unit member C1 23 is integrally formed with a hollow leg 32. Likewise, the unit member C2 24 is formed integrally with a hollow leg 33. The legs 32, 33 are integrally formed with the flat plate 38 and they project toward the one side 381 of the flat plate 38 and are opened to the other side 382. Each of the legs 32, 33 is formed in a truncated cone shape, the diameter of which is gradually reduced toward the side 381. The engaging convex portion 321 is formed on the projecting end of the leg 32 and the engaging concave portion 331 capable of engaging with the engaging convex portion 321 is formed on the projecting end of the leg 33. Each of the projecting ends of the legs 32, 33 is provided with eight through holes 39 having a small diameter so that water inside the legs 32, 33 can be flowed out.

The projecting end of the leg 32 of the unit member C1 23 is placed to the upper side in the vertical direction and the projecting end of the leg 33 of the unit member C2 24 is placed to the lower side in the vertical direction so that the unit member C1 and the unit member C2 are stacked in two stages in the vertical direction. Then, by engaging the engaging convex portion 321 of the leg 32 with the engaging concave portion 331 of the leg 33, the unit member C1 23 and the unit member C2 24 can be connected in both horizontal and vertical directions. On the other side 382 of the flat plate 38 of each of the unit member C1 23 and the unit member C2 24, a square contact surface 34 with a side length of L1 is formed. The contact surface 34 is formed in the thickness of H/2 that is same as the thickness of the contact surface 34 of either the unit member A 21 or the unit member B 22. On the contact surface 34, two engaging portions 35 and two engaged portions 36 are formed. The engaging portion 35 is a convex portion projecting from the contact surface 34 toward the other side 382 of the flat plate 38 and the engaged portion 36 is a concave portion being opened to the contact surface 34. Said two engaging portions 35 and said two engaged portions 36 are arranged at an angular interval of 90 degree on the same circumference that is concentric with the legs 32, 33. The engaging portion 35 and the engaged portion 36 are formed face to face on the same diagonal line. Because of that the leg 32 and the leg 33 of the unit member A 21, the unit member B 22, the unit member C1 23 and the unit member C2 24 are formed in a hollow truncated cone shape, they can be compactly stacked during transportation, which leads to the lowering of the transportation cost.

Now, the order to assemble the unit member A, the unit member B, the unit member C1 and the unit member C2 to build the box-type rainwater storage/infiltration facility will be explained hereinbelow.

### [First Stage Unit members Group 11]

The first stage unit members group 11 shown in Fig. 2 is configured by placing nine pieces of the unit member A 21 stacked in two stages on a horizontal plane in three rows and three lines equidistantly in a lattice pattern. The distance between the sides of the flat plates 31 of the adjacent unit members A 21 stacked in two stages is set to L2. Furthermore, three pieces of the unit member B 22 stacked in two stages are placed equidistantly and in parallel to the row and the line on the far side of the unit member A 21 stacked in two stages shown in Fig. 2. The distance between the unit member B 22 and the adjacent unit member A 21 is also set to L2. Again, the distance between two adjacent sides of the flat plate 37 is also set to L2. Still further, one two-staged unit member C1 23 or the unit member C2 24 is placed at the point of intersection of the rows of three two-staged unit members B 22. The distance between the side of the flat plate 38 of either the two-staged unit member C1 23 or the unit member C2 24 and the side of the flat plate 37 of the two-staged unit member B 22 is also set to L2. Namely, as to the first stage unit members group 11, all of the two-staged unit member A 21, the unit member B 22, the unit member C1 23 and the unit member C2 24 are placed at the same distance of L2 and in a lattice pattern.

### [Cover Member A]

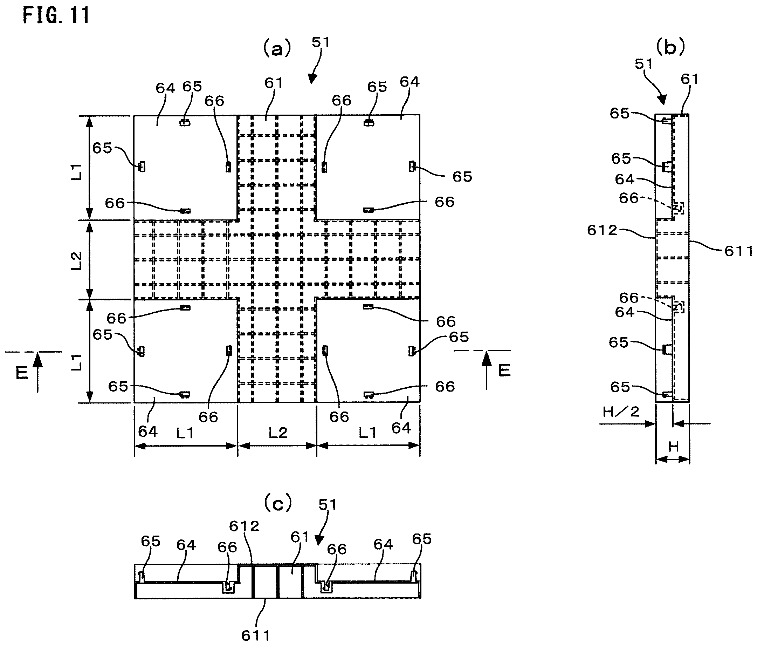

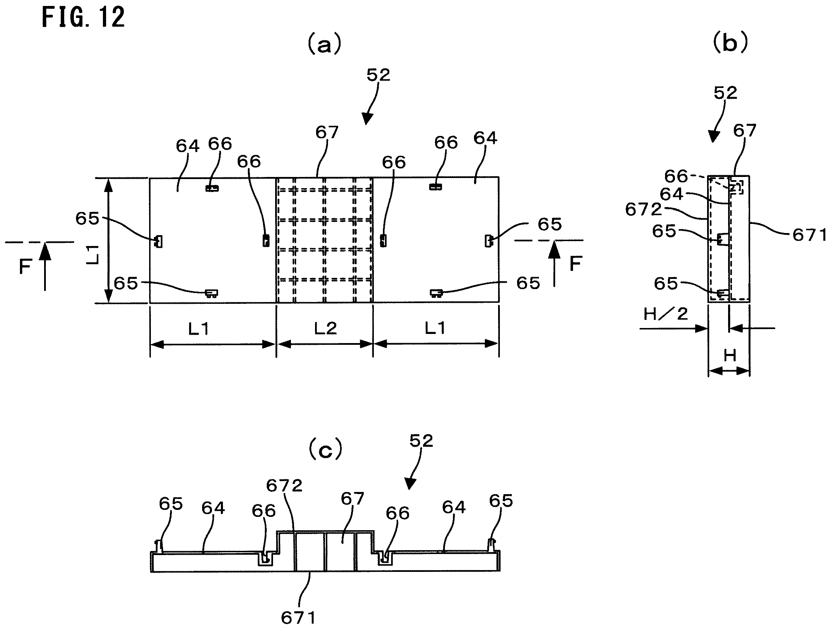

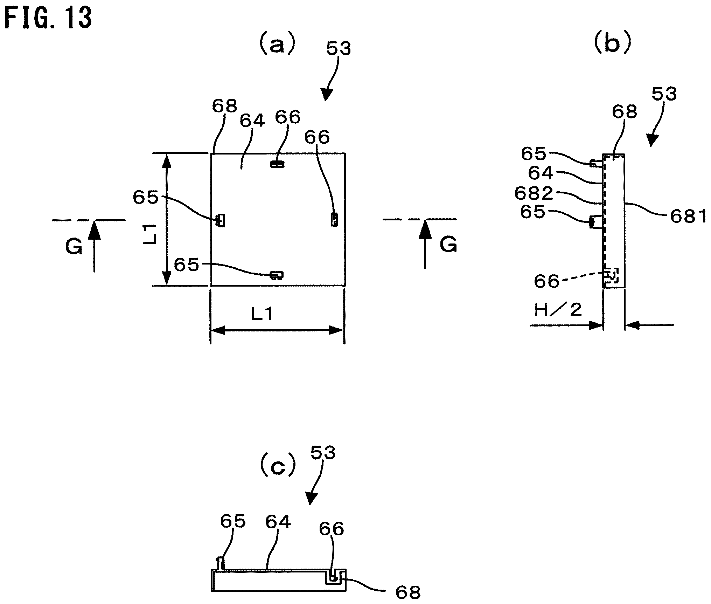

As shown in Fig. 2, the cover member A is used to close the bottom of the rainwater storage/infiltration facility. Fig. 11 shows the details, and the void space in the bottom side of the first stage unit members group 11 is closed by installing the cover member A shown in Fig. 11, the cover member B shown in Fig. 12 and the cover member C shown in Fig. 13. As shown in Fig. 11, a square flat plate 61 is provided to the cover member A 51. One lateral side 611 of the flat plate 61 is formed flat and a square contact surface 64 having a side length of L1 is formed to each of the four corners on the other side 612. The contact surfaces 64 are formed equidistantly on the four corners of the flat plate 61 and each is dented in the direction of the side 611 by half the thickness H of the flat plate 61. The thickness H of the flat plate 61 is same as the thickness H of the flat plate 31 of the unit member A shown in Fig. 8. On each of these contact surfaces 64, two engaging portions 65 and two engaged portions 66 are formed. The engaging portion 65 is a convex portion projecting from the contact surface 64 toward the other side 612 of the flat plate 61, and the engaged portion 66 is a concave portion being opened to the contact surface 64. The shape of the two engaging portions 65 and the two engaged portions 66 is same as the shape of the engaging portion 35 and the engaged portion 36 of the unit member A shown in Fig. 8, respectively, and they are formed on the same positions as the positions of the engaging portion 35 and the engaged portion 36 of the unit member A. As shown in Fig. 11, the side length of the square flat plate 61 is 2L1+L2, which is same as the side length of the flat plate 31 of the unit member A shown in Fig. 8.

### [Cover Member B]

As shown in Fig. 2, the cover member B is adapted to close (fix) the end portions of the bottom of the rainwater storage/infiltration facility. Fig. 12 shows the details on this configuration, and the rectangular flat plate portion 67 is provided to the cover member B 52. The one lateral side 671 of the flat plate portion 67 of the cover member B 52 is formed flat, and the square contact surface 64 having the side length of L1 is formed to each of the two corners on the other lateral side. The contact surface 64 is formed so as to be dented toward the one lateral side 671 by half the thickness H of the flat plate 67. On the contact surface 64, two engaging portions 65 and two engaged portions 66 are formed. The engaging portion 65 is a convex portion that projects from the contact surface 64 toward the other lateral side 672 of the flat plate 67, and the engaged portion 66 is a concave portion that is opened to the contact surface 64. The shape of the two engaging portions 65 and the two engaged portions 66 is same as the shape of the engaging portion 35 and the engaged portion 36 of the unit member B shown in Fig. 9 and are formed on the same position as the positions of the engaging portion 35 and the engaged portion 36 of the unit member B. As shown in Fig. 12, the length of the longer side of the rectangular flat plate portion 67 is 2L1+L2 and the length of the shorter side is L1. Namely, the lengths of the longer side and the shorter side of the flat plate portion 67 are designed to be same as the lengths of the longer and shorter sides of the unit member B 22.

### [Cover Member C]

As shown in Fig. 2, the cover member C is adapted to close the corner of the bottom of the rainwater storage/infiltration facility. As shown in Fig. 13, the cover member C 53 is provided with a square flat plate 68 having a side length of L1. One lateral side 681 of the flat plate 68 of the cover member C 53 is formed flat, and a square contact surface 64 having a side length of L1 is formed on the other lateral side 682 of the flat plate 68. The thickness of the contact surface 64 is set to H/2, which is same as the thickness of the contact surfaces 64 of the cover member A 51 and the cover member B 52. On the contact surface 64, two engaging portions 65 and two engaged portions 66 are formed. The engaging portion 65 is a convex portion projecting from the contact surface 64 toward the other lateral side 682 of the flat plate 68, and the engaged portion 66 is a concave portion that is opened to the contact surface 64. The two engaging portions 65 and the two engaged portions 66 are same as the engaging portion 65 and the engaged portion 66 of the unit member C shown in Fig. 10 in the shape and are formed in the same positions as those of the engaging portion 35 and the engaged portion 36 of the unit member C.

As described above, the cover member C 53 is placed on the contact surface 34 at the corner in front of the unit member A 21 that is placed at the corner on the front side shown in Fig. 2. Then, the engaging portion 65 and the engaged portion 66 of the cover member C 53 are engaged with the engaging portion 35 and the engaged portion 36 of the unit member A 21 to thereby fix the cover member C 53 to the contact surface 34 of the unit member A 21. As a result, the opening of the leg 32 or 33 placed in the corner in front of the unit member A 21 is closed. Also, the cover member B 52 is placed on the contact surface 34, 34 in the front side of the unit member A 21 and the unit member B 22 those which are placed in the front row and line of Fig. 2. Then, the engaging portions 65 and the engaged portions 66 of the cover members B 52 are engaged with the engaging portions 35 and the engaged portions 36 of the unit members A 21 and the unit members B 22 to thereby fix the cover members B 52 to the contact surfaces 34, 34 of the unit member A 21 and the unit member B 22.

As a result, the opening of the leg 32 or 33 placed in the front side of the unit member A 21 and the unit member B 22 is closed. Further, the cover member A 51 is placed on the adjacent four contact surfaces 34, 34, 34, 34 of the unit member A 21, the unit member B 22, unit member C1 23 and the unit member C2 24 other than the ones mentioned above. Then, the engaging portions 35 and the engaged portions 36 of the unit member A 21, the unit member B 22, the unit member C1 23 and the unit member C2 24 are engaged with the engaging portions 65 and the engaged portions of the cover member A 51 to thereby fix the cover member A 51 to the contact surfaces 34, 34, 34, 34 of the unit member A 21, the unit member B 22, unit member C1 23 and the unit member C2 24. As a result, the openings of the adjacent four legs 32, 32, 33, 33 of the unit member A 21, the unit member B 22, the unit member C1 23 and the unit member C2 24 are closed.

### [Second Stage Unit Members group 12]

The second stage unit members group 12 shown in Fig. 3 is structured by placing nine sets of the two-staged unit members A 21 on a horizontal plane equidistantly in three rows and three lines in a lattice pattern. The distance between the adjacent flat plates 31 of the two-staged unit members A 21 is set to L2. Further, three sets of the two-staged unit members B 22 are placed equidistantly in front of and in parallel to the front rows and the front line of the two-staged unit members A 21 shown in Fig. 3, respectively. The distance between the two-staged unit member B 22 and the adjacent two-staged unit member A 21 is also set to L2. Again, the distance between the side of the flat plate 37 of the two-staged unit members B 22 and the other side of the adjacent flat plates 37 is also set to L2. Still further, one two-staged unit member C1 23 and one two-staged unit member C2 24 are placed on the intersection of the row and the line each being consisted of three two-staged unit members B 22 Likewise, the distance between the side of the flat plate 38 of either the two-staged unit member C1 23 or the two-staged unit member C2 24 and the side of the flat plate 37 of the two-staged unit member B 22 is also set to L2. Namely, difference of the first stage unit members group 11 and the second stage unit members group 12 is that the two-staged unit members B 22, the two-staged unit members C1 23 and the two-staged unit members C2 24 are placed in parallel to both the front row and the front line of the two-staged unit members A 21.

### [Lateral Side Cover Member A]

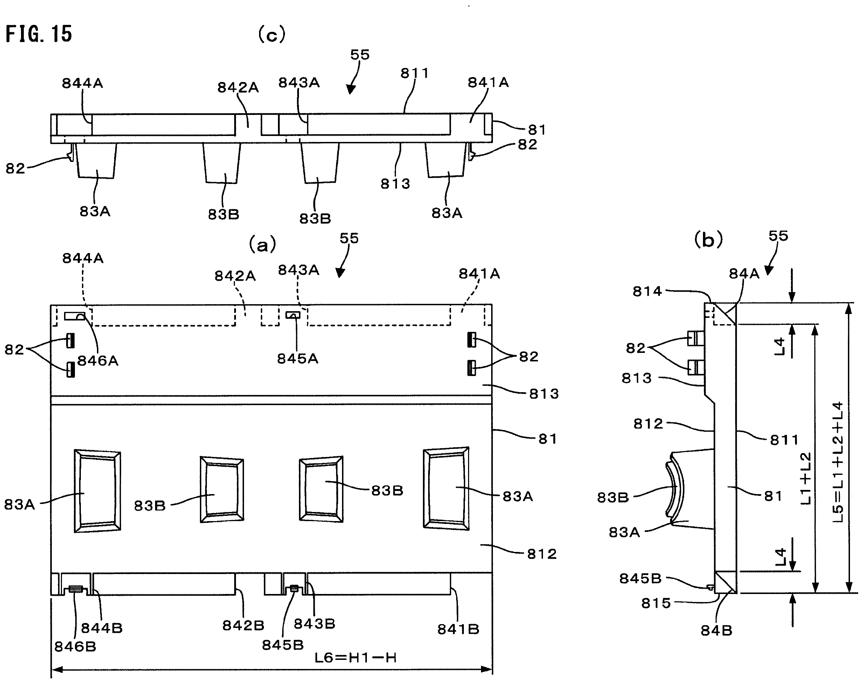

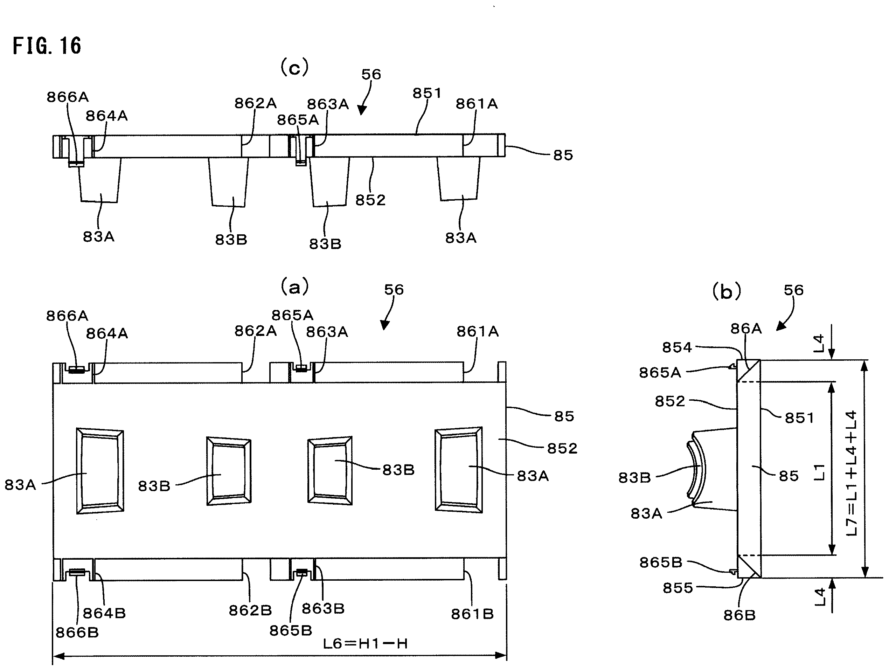

As shown in Fig. 3, the lateral side cover member A is adapted to close the lateral side of the rainwater storage/infiltration facility. The void space on the lateral side of the second stage unit members group 12 of the rainwater storage/infiltration facility is closed by installing the lateral side cover member A 55 shown in Fig. 15 and the lateral side cover member B shown in Fig. 16. As shown in Fig. 15, the lateral side cover member A 55 is provided with a rectangular flat plate 81. One lateral side 811 of the flat plate 81 is formed flat, and a contact surface 813 projecting beyond the other lateral side 812 is formed on the upper side of the other lateral side 812 (the upper side of (a) and (b) in Fig. 15). On the contact surface 813, two engaging portions 82 are formed respectively on the both ends in the left-right direction shown in Fig. 15. The engaging portion 82 is a convex portion projecting from the contact surface 813 and is capable of engaging with the lateral side 371 of the flat plate 37 of the unit member B. On the lower position of the other lateral side 812 (the lower position in (a) and (b) in Fig. 15), two contact projections 83A and another two contact projections 83B both projecting from the other lateral side 812 are formed. The contact projections 83A and 83B are capable to contact to the outer circumference of the truncated cone-shaped legs 32, 33 of any of the unit member A, the unit member B, the unit member C1 and the unit member C2. The contact projections 83A, 83A with less projecting degree are capable to contact to the larger outer circumference of the legs 32, 33. While the contact projections 83B, 83B with greater projecting degree is capable to contact to the smaller outer circumference of the legs 32, 33.

On the end face 814 of the flat plate 81 (the upper portion (a) and (b) in Fig.15), a contact surface 84A inclined at 45 degrees is formed. The inclined contact surface 84A is facing to the lateral side 811. Yet in the contact surface 84 of the other end face 815 of the flat plate 81 (the lower portion of (a) and (b) in Fig. 15), the contact surface 84B inclined at 45 degrees is formed. The inclined contact surface 84B is facing to the other lateral side 812. On the inclined contact surface 84B, two engaging grooves 841B, 842B and two engaging projections 843B, 844B are formed. Each of the engaging grooves 841B, 842 B is a rectangular groove formed by scraping the inclined contact surface 84B. Each of the engaging projections 843B, 844B is a rectangular projection projecting from the inclined contact surface 84B toward the other lateral side 812 and formed on the same flat plane as that of the other lateral side 812. The engaging projections 843 B, 844B are provided with the engaging portions 845B, 846B, the shape of those which are identical. The engaging portions 845B, 846B are formed to project from the other lateral side 812.

On the inclined contact surface 84A, two engaging projections 841A, 842A and two engaging grooves 843A, 844A are formed. Each of the engaging projections 841A, 842A is a rectangular projection projecting from the inclined contact surface 84A toward the lateral side 811 and being formed on the same plane where the lateral side 811 is formed. Each of the engaging grooves 843A, 844A is a rectangular groove formed by scraping the inclined contact surface 84A. In the bottoms of the engaging grooves 843A, 844A, rectangular engaging holes 845A, 846A are formed, respectively. The engaging holes 845A, 846A are opened to the contact surface 813. As shown in Fig. 3, to the lateral side at the front right side of the second stage unit members group 12, six lateral side cover members A are installed side by side in order from the front corner. The length L5 of the short side of the lateral side cover member A (the vertical side shown in Fig. 15) is set to L1+L2+L4. L4 is the length in the short side direction of the inclined contact surfaces 84A, 84B of the lateral side cover member A. By setting the height of the vertically stacked two-staged unit member B 22 to H1, the length L6 of the long side of the lateral side cover member A (the side in the vertical direction shown in Fig. 15(a)) is represented with H1-H. H is the thickness of the flat plate 37 of the unit member B 22.

As shown in Fig.3, on the inclined contact surface 84A of the lateral side cover member A locating on the nearest side, the inclined contact surface 84B of the lateral side cover member A locating on one row and line in the back is laid. Accordingly, the engaging grooves 841B, 842B of the lateral side cover member A locating on one row and line in the back are engaged with the engaging projections 841A, 842A of the lateral side cover member A locating on the nearest side. In addition, the engaging projections 843B, 844B of the lateral side cover member A locating on one row and line in the back are engaged with the engaging grooves 843A, 844A of the lateral side cover member A locating on the nearest side. At the same time, the engaging portions 845B, 846B of the lateral side cover member A locating on one row and line in the back are engaged with the engaging holes 845A, 846A of the lateral side cover member A locating on the nearest side, whereby the lateral side cover member A locating on the nearest side and the lateral side cover member A locating on one row and line in the back are connected. According to the same procedure, totally six lateral side cover members A are installed to the lateral sides of the second stage unit members group 12 locating on the front and right side.

Next, as shown in Fig. 3, one lateral side cover member A flipped upside down is installed to the corner of the lateral side of the second stage unit members group 12 locating on the front left side. The contact projections 83A, 83B of the lateral side cover member A flipped upside down contact to the outer circumference of the truncated cone-shaped legs 32, 33 of the unit member C1 and the unit member C2. Further, the engaging portions 82, 82 of the lateral side cover member A flipped upside down engage with the other lateral sides 312, 312 of the flat plates 31 of the first stage unit member A and the third stage unit member A. Then, the inclined contact surface 84B flipped upside down of the lateral side cover member A is stacked on the inclined contact surface 84B of the lateral cover member A locating on the corner in the front right lateral side shown in Fig. 3. Then, the engaging projections 843B, 844B flipped upside down of the lateral side cover member A are engaged with the engaging grooves 841B, 842B of the lateral side cover member A locating on the corner in the front right lateral side of cover member A. At the same time, the engaging grooves 841B, 842B flipped upside down of the lateral side cover member A are engaged with the engaging projections 843B, 844B of the lateral side cover member A locating on the corner in the front right side. As a result, the lateral side cover member A locating on the corner in the front right side and the lateral side cover member A flipped upside down are connected. Although it is not shown, the void space in the front left lateral side is closed by installing five pieces of lateral side cover members A flipped upside down to the front left lateral side of the second stage unit members group 12 continuing to the lateral side cover member A flipped upside down on the corner in the front left lateral side.

### [Lateral Side Cover Member B]

AS shown in Fig. 3, the lateral side cover member B is adapted to close the corner of the rainwater storage/infiltration facility. As a result of installing the six pieces of the lateral side cover members A to the front right side of the second stage unit members group 12, void space with the length of L1 remains in the corner on back side of the front right lateral side of the second stage unit members group 12. Therefore, this void space is shielded by installing the lateral side cover member B shown in Fig. 16. As shown in Fig. 16, a rectangular flat plate 85 is formed in the lateral side cover member B 56. The side 851 and the other side 852 of the flat plate 85 are formed flat. On the other lateral side 852, two contact projections 83A and two contact projections 83B both projecting from the other lateral side 852 are formed on the vertically middle portion shown in Fig. 16 (a) and (b). The contact projection 83A and the contact projection 83B have the same shape and the same function as those of the contact projection 83A and the contact projection 83B.

On one end face 854 of the flat plate 85 (the upper side of (a) and (b) in Fig. 16), the inclined contact surface 86A with an angle of 45 degrees is formed. The inclination of the inclined contact surface 86A is opposite in the direction to the inclination of the inclined contact surface 84A of the lateral side cover member A and is facing to the other lateral side 852. Further, on the other end face 855 of the flat plate 85 (the lower side of (a) and (b) in Fig. 16), the inclined contact surface 86B at an angle of 45 degrees is formed. The inclined contact surface 86B is also facing to the other lateral side 852. The inclined contact surface 86A and the inclined contact surface 86B are formed symmetrically to each other in the vertical direction in Fig. 16(a). That is, on the inclined contact surface 86B, two engaging grooves 861B, 862B and two engaging projections 863B, 864B are formed. Each of the engaging grooves 861B, 862B is a rectangular groove formed by scraping the inclined contact surface 86B. And, each of the engaging projections 863B, 864B is a rectangular projection protruding toward the other lateral side 852 and being formed on the same plane where the other lateral side 852 is formed. On the engaging projections 863B, 864B, the engaging portions 865B, 866B, both being formed in the same shape, are formed, respectively. The engaging portions 865B, 866B are formed to protrude from the other lateral side 852.

Like the inclined contact surface 86B, two engaging grooves 861A, 862A and two engaging projections 863A, 864A are also formed on the inclined contact surface 86A. Each of the engaging grooves 861A, 862A is a rectangular groove formed by cutting out the inclined contact surface 86A. Each of the engaging projections 863A, 864A is a rectangular projection protruding from the inclined contact surface 86A toward the other lateral side 852 and is formed on the same plane where the other lateral side 852 is formed. On the engaging projections 863A, 864A, the engaging portions 865A, 866A, both having the same shape, are formed, respectively. The engaging portions 865A, 866A are formed to protrude from the other lateral side 852. The length L7 of the short side (the side in the vertical direction of (b) in Fig. 16) of the lateral side cover member B is set to L1+L4+L4. L4 is the length in the short side direction of either the inclined contact surface 86A or the inclined contact surface 86B of the lateral side cover member B. The length L6 of the long side (the side in the left-right direction in Fig. 16(a)) of the lateral side cover member B is same as the length of the long side of the lateral side cover member A, which is set to H1-H (subtract H from H1).

On the inclined contact surface 84A of the lateral side cover member A locating on the far side shown in Fig. 3, the inclined contact surface 86B of the lateral side cover member B is stacked. Then, the engaging grooves 861B, 862B of the lateral side cover member B are engaged with the engaging projections 841A, 842A of the lateral side cover member A, respectively. Yet, the engaging projections 863B, 864B of the lateral side cover member B are engaged with the engaging grooves 843A, 844A of the lateral side cover member A, respectively. At the same time, the engaging portions 865B, 866B of the lateral side cover member B are engaged with the engaging holes 845A, 846A of the lateral side cover member A, respectively, whereby the lateral side cover member A and the lateral side cover member B are connected.

Next, as shown in Fig. 3, one piece of lateral side cover member B flipped upside down is installed on the corner next to the lateral side at the far right side of the second stage unit members group 12. The contact projections 83A, 83B of the lateral side cover member B flipped upside down are contacted to the outer circumferences of the cylindrical legs 32, 33 of the unit member B. Then, the inclined contact surface 86A of the lateral side cover member B flipped upside down is stacked on the inclined contact surface 86A of the lateral side cover member B locating on the corner in the back side of the front right lateral side shown in Fig. 3. Then, the engaging projections 863A, 864A of the lateral side cover member B flipped upside down are engaged with the engaging grooves 861A, 862A of the lateral side cover member B locating on the corner in the back side of the front right lateral side. Yet, the engaging grooves 861A, 862A of the lateral side cover member B flipped upside down are engaged with the engaging projections 863A, 864A of the lateral cover member B locating on the corner in the back side of the front right lateral side. As a result, the lateral side cover member B locating on the corner in the back side of the front right lateral side and the lateral side cover member B flipped upside down are connected. Although it is not shown, the void space created on the far right side is shielded by installing five pieces of lateral side cover members A flipped upside down to the far right lateral side of the second stage unit members group 12 continuing to the lateral side cover member B flipped upside down.

According to the procedure as described above, the void space created in the vicinity of the lateral side of the unit members groups on all stages can be shielded with two kinds of members of the lateral side cover member A and the lateral side cover member B. As described above, the lateral sides of the unit members group are shielded with a plurality of lateral cover members A at first, and the part on the corner where the void space with the length of L1 remains is shielded by installing one piece of lateral side cover member B. Further, the part on the corner of the lateral side adjacent to the side shielded at first is shielded by installing either one piece of lateral side cover member B flipped upside down or one piece of lateral side cover member A flipped upside down.

### [Connection of Second Stage Unit Members Group 12 onto First Stage Unit Members Group 11]

As shown in Fig. 4, the second stage unit members group 12 is connected onto the first stage unit members group 11. As shown in Fig. 4, the unit members A of the second stage unit members group 12 are placed to be shifted to the back side in the row and the line by distance of L1+L2 relative to the unit members A of the first stage unit members group 11. Therefore, the contact surfaces 34 of the unit members A of the second stage unit members group 12 contact against the contact surfaces 34 of the adjacent four unit members A of the first stage unit members group 11. As a result, two engaging portions 35 and two engaged portions 36 of the first stage unit member A and the second stage unit members A are respectively engaged (connected) with each other, whereby the first stage unit members A and the second stage unit members A are connected in both horizontal and vertical directions. The contact surface 34 is formed to be dented toward the lateral side 311 by the length of half the thickness H of the flat plate 31. Consequently, by contacting to connect the contact surfaces 34 of the first stage unit members group 11 and the second stage unit members group 12, the flat plates 31 of the first stage unit members group 11 and the second stage unit members group 12 are aligned on the same plane. As a result, the shear area of the connection portion became greater and the strength of the connection be enhanced, particularly the strength against loads from the horizontal direction will be improved.

Likewise, the unit members B of the second stage unit members group 12 are placed to be shifted by the length of L1+L2 in the row and line directions against the unit members A of the first stage unit members group 11. Therefore, the contact surfaces 34 of the unit members B of the second stage unit members group 12 contact in the bridging fashion to the contact surfaces 34 of the two adjacent unit members A of the first stage unit members group 11. As a result, two engaging portions 35 and two engaged portions 36 of the first stage unit members A and the second stage unit members B are respectively connected, whereby the first stage unit members A and the second stage unit members B are connected in the horizontal and vertical directions. Besides, the unit members C1, C2 of the second stage unit members group 12 are placed on the corner in the front side of the unit members A of the first stage unit members group 11. Therefore, the contact surfaces 38 of the unit members C1, C2 of the second stage unit members group 12 contact to the contact surfaces 34 on the corner of the unit member A of the first stage unit members group 11. As a result, two engaging portions 35 and two engaged portions 36 of the second stage unit members C1, C2 are engaged with the first stage unit members A with each other, whereby the first stage unit members A are connected to the second stage unit members C1, C2 in the horizontal and vertical directions. Accordingly, the second stage unit members group 12 and the first stage unit members group 11 are connected in both horizontal and vertical directions. Then, the inspection port 4 in a square shape in the plan view passing through in the vertical direction is formed. The inspection port 4 is formed between the lateral sides of the flat plates 31 of the adjacent unit members A 21. Each of the inspection port 4 is formed in a square shape with the side length of L2, and nine inspection ports are formed equidistantly.

### [Connection of the third stage unit members group 13 onto the second stage unit members group 12]

Onto the second stage unit members group 12 shown in Fig. 4, the third stage unit members group 13 shown in Fig. 5 is connected. As the structure of the third stage unit members group 13 shown in Fig. 5 is identical with the structure of the first stage unit members group 11 shown in Fig. 2, detailed explanation on the third stage unit members group is skipped. The unit members A of the third stage unit members group 13 are placed to be shifted to the front side both in the row and line by the length of L1+L2 against the unit members A of the second stage unit members group 12. Therefore, the contact surfaces 34 of the unit members A on the corner in the front side of the third stage unit members group 13 contact to the contact surfaces 38 of the unit members C1, C2 of the second stage unit members group 12, the contact surfaces 34, 34 of two unit members B adjacent to the unit members C1, C2, and the contact surface 34 of one unit member A adjacent to the unit members C1, C2. As a result, the unit members A locating on the corner in the front side of the third stage are engaged with the second stage unit members group 12 and are connected with one other in both horizontal and vertical directions.

The contact surfaces 34 of the unit members A in the front side row and line of the third stage unit members group 13 contact to the contact surfaces 34, 34 of the unit members B on the front side row and line of the second stage unit members group 12 and the contact surfaces 34, 34 of one unit member A adjacent to the unit member B. As a result, the unit members A in the front row and line of the third stage unit members group 13 are engaged with the second stage unit members group 12 and are connected in both horizontal and vertical directions. Yet, the remained unit members A of the third unit members group 13 contact in the bridging fashion to the contact surfaces 34 of four unit members A adjacent to the second unit members group 11. As a result, the remaining unit members A of the third stage are engaged with the second unit members group 12 and are connected in both horizontal and vertical directions.

The unit member B, the unit member C1 and the unit member C2 on the far side of the third stage unit members group 13 contact to the contact surfaces 34, 34 of the unit members A in the row and line on the far side of the second stage unit members group 12. As a result, the unit member B, the unit member C1 and the unit member C2 on the far side of the third stage unit members group 13 are connected to the second stage unit members group 12 in both horizontal and vertical directions. As a result, as shown in Fig. 1, the first stage unit members group 11, the second stage unit members group 12 and the third unit members group 13 are stacked and engaged in both horizontal and vertical directions, whereby the rainwater storage/infiltration facility 1 is constituted. Then, the inspection port 4, the shape in the plan view is square, passing through in the vertical direction is formed up to the level of the flat plate 31 of the unit member A 21 locating under the third stage unit members group 13.

As described above, the rainwater storage/infiltration facility 1 according to the embodiments of this invention is so configured that the unit member A 21, the unit member B 22, the unit member C1 23 and the unit member C2 24 are so placed that the distance between the respective adjacent lateral sides of the flat plates 31, 37, 38 of the unit member A 21, the unit member B 22, the unit member C1 23 and the unit member C2 24 is set to L2. Therefore, the number of the unit members used per unit volume can be reduced to make the manufacturing cost lowered and the void space ratio of the rainwater storage space is improved, which makes the rainwater storage capacity greater. Furthermore, the inspection work for the rainwater storage/infiltration facility will be made easier because the formation of many inspection ports that penetrate in the vertical direction is made executable. Yet, the manufacturing cost is further reduced since no fitting members for connecting the unit members are required. With the rainwater storage/infiltration facility according to the embodiments of this invention, loads imposed from the vertical direction can be properly supported by virtue of the alignment of the legs of the stacked unit members on the same vertical line. Still further, loads from the horizontal direction are also supported properly by virtue of another alignment on a horizontal line of the legs of the unit members being placed on the horizontal plane.

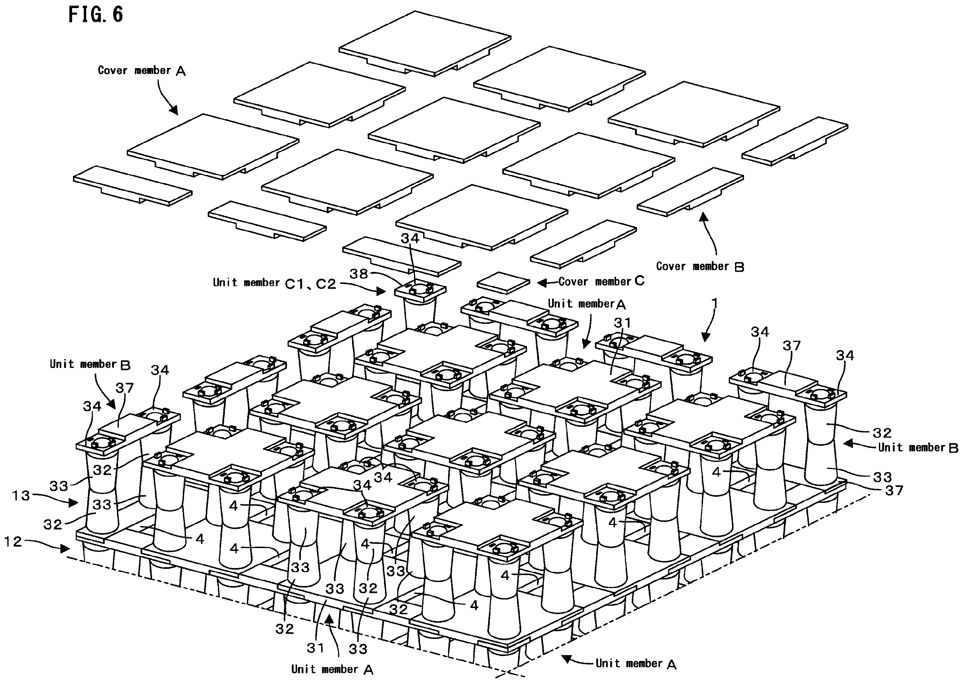

Fig. 6 is a perspective view of the cover members adapted to be installed on the third stage unit members group 13 of the rainwater storage/infiltration facility 1 shown in Fig. 1 for shielding the void space over the rainwater storage/infiltration facility 1 to prevent the invasion of earth and sand into the said facility. As shown in Fig. 6, the void space in the upper side of the rainwater storage/infiltration facility of this invention 1 is shielded by installing the cover members A shown in Fig. 11, the cover members B shown in Fig. 12 and the cover members C shown in Fig. 13 as well as the shielding of the bottom side of the rainwater storage/infiltration facility 1 shown in Fig. 2 with the cover members. As shown in Fig. 6, the cover member C 53 is stacked on the contact surface 34 on the corner in the front side of the unit member A 21 which is placed on the corner in front in Fig. 6. Then, the engaging portion 35 and the engaged portion 36 of the unit member A 21 are engaged with the engaging portion 65 and the engaged portion 66 of the cover member C 53 to fix the cover member 53 to the contact surface 34 of the unit member A 21. As a result, the opening of either the leg 32 or the leg 33 placed on the corner in front of the unit member A 21 is closed. Moreover, the cover members B 52 are stacked on the contact surfaces 34, 34 in the front side of the unit members A 21 and the unit members B 22 placed in the front row and line in Fig. 6. Then, the engaging portions 65 and the engaged portions 66 of the cover members B 52 are engaged with the engaging portions 35 and the engaged portions 36 of the unit members A 21 and the unit members B 22 to fix the cover members B 52 to the contact surfaces 34, 34 of the unit member A 21 and the unit member B 22.

As a result, the openings of either the legs 32 or the legs 33 placed in the front side of the unit members A 21 and the unit members B 22 are shielded. Furthermore, onto the adjacent four contact surfaces 34, 34, 34, 34 of the unit members A 21, the unit members B 22, the unit members C1 23 and the unit members C2 24, the cover members A 51 are placed, respectively. Then, the engaging portions 65 and the engaged portions 66 of the cover members A 51 are engaged with the engaging portions 35 and the engaged portions 36 of the unit members A 21, the unit members B 22, unit members C1 23 and the unit members C2 24 to fix the cover members A 51 to the contact surfaces 34, 34, 34, 34 of the unit members A 21, the unit members B 22, the unit members C1 23 and the unit members C2 24. As a result, the openings of the adjacent four legs 32, 32, 33, 33 of the unit members A 21, the unit members B 22, the unit members C1 23 and the unit members C2 24 are shielded.

### [Cover Member D]

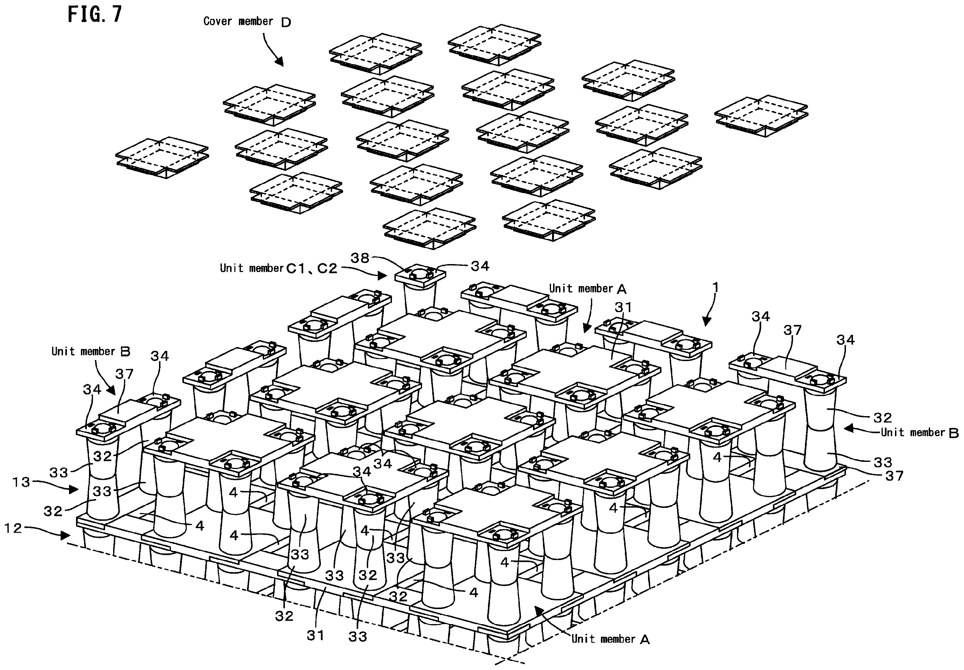

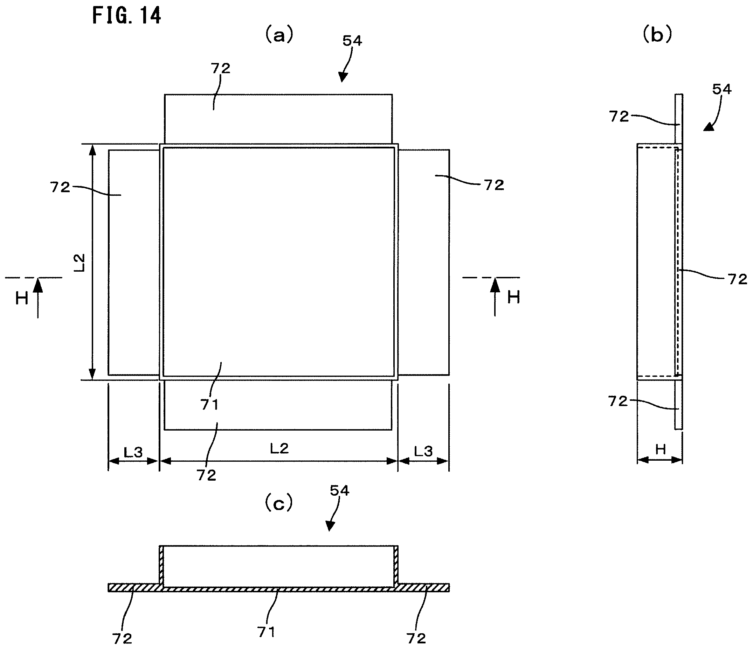

Fig.7 is a perspective view of the cover member D adapted to be installed on the third stage unit members group 13 of the rainwater storage /infiltration facility 1 shown in Fig. 1, which shields the inspection ports 4 of the rainwater storage/infiltration facility 1 to prevent the invasion of earth and sand into the facility from occurring. As explained with referring to Fig. 6, the void space in the upper side of the rainwater storage/infiltration facility 1 of this invention is shielded by installing the cover members A, the cover members B and the cover members C, but the shielding of the inspection port 4 is made with the different cover members D. The cover member A, the cover member B, the cover member C and the cover member D are made of any type of synthetic resins. As shown in Fig. 14, the cover member D 54 is formed in a square box-shaped member with a side length of L2 and with the thickness of H that is same as the thickness of the flat plate 31 of the unit member A shown in Fig. 8. The length L2 of the side of the cover member D 54 is formed in the same length of the length L2 of the side of the square inspection port 4. On one lateral side of the cover member D 54, the bottom plate 71 is integrally formed and the other lateral side of the cover member D 54 is opened. On the four sides of the cover member D 54, the flange portions 72 with the width length of L3 are formed.

As shown in Fig. 7, after placing the bottom plate 71 of the cover member D 54 up, push the cover member D 54 into the inspection port 4 of the third stage unit members group 13 of the rainwater storage/infiltration facility 1 to install the cover member D 54 thereto. Then, the inspection port 4 of the rainwater storage/infiltration facility 1 is shielded and invasion of earth and sand into the facility is completely prevented from occurring. In this way, the invasion of earth and sand into the rainwater storage/infiltration facility 1 can be prevented from occurring by completely shielding the void space of the rainwater storage/infiltration facility 1 and covering earth and sand on the top of said facility 1, and the land where the rainwater storage/infiltration facility 1 has been embedded can be utilized. Note that, when inspection of the rainwater storage/infiltration facility 1 is required, the inspection shall be done by removing the cover member D 54 from the rainwater storage/infiltration facility 1.

### [Inspection Port]

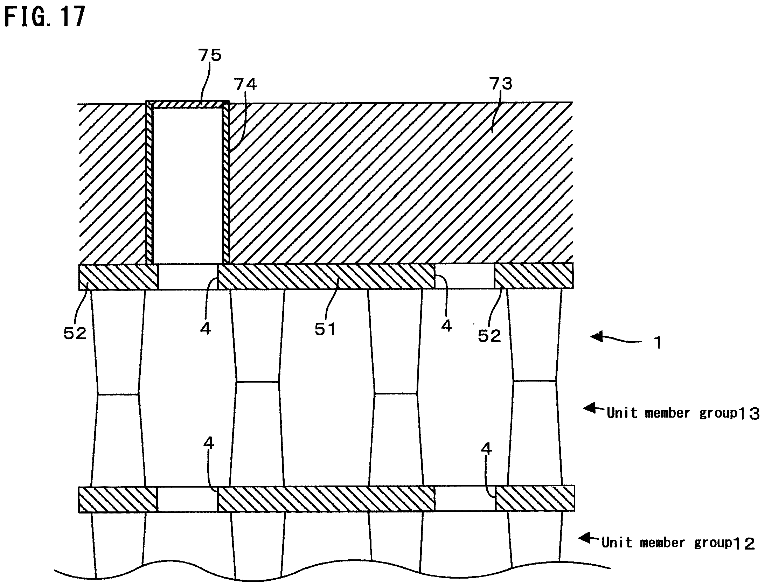

As described above, the rainwater storage/infiltration facility 1 according to this invention is provided with through holes that penetrate from the top stage to the bottom stage without performing special construction and design change by virtue of its structure. Fig. 17 is a longitudinal cross section of the inspection port for inspection camera use, which is embedded in the covered soil laid on the rainwater storage/infiltration facility. As shown in Fig. 17, when covering the cover soil 73, such as earth and sand and gravel, on the upper side of the rainwater storage/infiltration facility 1, a hollow cylindrical structure (e.g. a pipe made of vinyl chloride or the like) 74 connecting the top of the inspection port 4 of the third stage unit members group 13 and the ground is embedded without installing the cover member D 54 to the inspection port 4. On the upper part of the hollow cylindrical structure 74, the lid 75 is attached removably. A plurality of the hollow cylindrical structures 74 are installed on the required portions of the inspection port 4. When inspection of the rainwater storage/infiltration facility 1 is required, the lid 75 is removed, and the inspection camera is inserted through the cylindrical structure 74 into the inspection port 4 so that the inspection is carried out. In this way, no work to remove and backfill the covered soil 73 around the inspection port 4 is required.

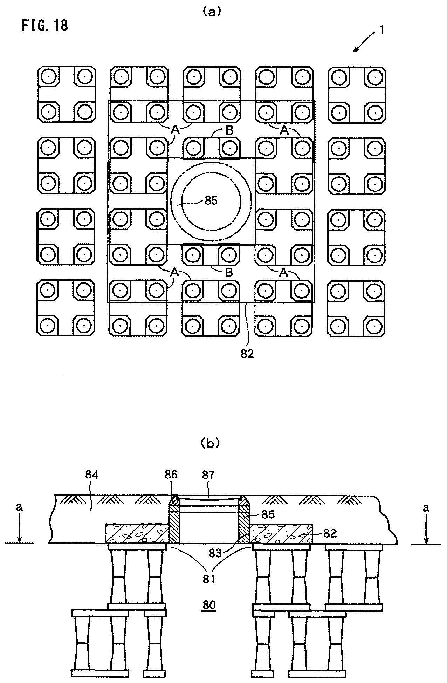

Although the inspection port 4 is for inspection camera use, there is a case that the workers are required to enter the rainwater storage/infiltration facility 1 for the repair works and sediment removal operation, etc. Fig. 18 shows the embodiment of providing the rainwater storage/infiltration facility with the inspection manhole, Fig. 18(a) is a plan view of the top stage of the rainwater storage/infiltration facility cut along the line a-a shown in Fig. 18(b), and Fig. 18(b) is a longitudinal cross section of the vicinity of the inspection manhole. The inspection manhole 80 is the space in square tubular shape formed in the vertical direction in the rainwater storage/infiltration facility 1. The size of the opening of the inspection manhole 80 is such an extent that an inspection worker can enter into the interior of the rainwater storage/infiltration facility. The inspection manhole 80 is the space in a horn-shape formed by removing some of the unit members A placed in the vertical direction of the rainwater storage/infiltration facility 1.

In the embodiment shown in Fig. 18 (a), ten pieces of unit members A are placed in a rectangular pattern around the outer circumference of the inspection manhole 80 provided on the top stage of the rainwater storage/infiltration facility 1. In this embodiment, two pieces of the unit members B are also placed (the upper and lower positions in Fig. 18(a)). The unit members B being fractional are fixed by the unit members A, but the mechanical strength is weak due to the formation of the inspection manhole 80. For this reason, as shown in Fig. 18(b), the unit members B are fixed with the reinforcing member 81 made of a rectangular angle member or the like, which is matched to the shape of the inspection manhole 80. Besides, on the top stage of the rainwater storage/infiltration facility 1 and it is also on the outer circumference of the inspection manhole 80, a square and plate-shaped concrete floor plate 82 is placed. On the central part of the concrete floor plate 82, a round hole 83 is formed. In the covered soil 84 on the concrete floor plate 82, a circular adjustment ring 85 for adjusting the level position of the cast iron lid 87 is arranged. On the adjustment ring 85, the cast iron lid 87 and a support frame 86 for supporting the cast iron lid are placed. When the inspection or the maintenance of the interior of the rainwater storage/infiltration facility 1 is required, the workers can open the cast iron lid 87 and go inside the facility. The inspection manhole 80 according to this embodiment is formed in such a structure that it extends from the top stage to the bottom stage without performing special construction and design change to the rainwater storage/infiltration facility 1.

### [Other Embodiments]

Although the embodiments of this invention are explained above, this invention is not limited to the embodiment described above. For example, the rainwater storage/infiltration facility 1 according to the embodiment of this invention is configured by stacking one set of the unit members group in three stages, the facility configured in more than one stage may be applicable. When no condition is required in the height of the facility or there is any structural constrain in the height of the facility to install, the structure built by laying the unit members A, the unit members B, the unit members C, the cover members A, etc. on a flat plane without jointing the legs with each other may be applicable. Note that, as the lower end of the leg in this case, the cover member (not shown) connecting to the tip concave portion and the convex portion are used. Further, although the legs in the embodiment of this invention are formed in a truncated cone shape, the cross-sectional shape of the legs is not limited to the round shape, any arbitrary shapes, such as a square cone shape and a hexagonal cone shape, may be applicable. Since distortion due to creep deformation occurs during the use of the rainwater storage/infiltration facility for a long time, it is necessity to check long-term performance against continuously acting load, and the guideline for the checking are defined by the related organization. Accordingly, the checking of the long-term performance against the continuously acting load has been conducted. In this respect, checking of the load in both the vertical and horizontal directions is carried out.

Although the thickness of the legs are constant (see Fig. 8, Fig. 9) in the above-described embodiments, the strength may be enhanced by means of increasing the diameter of the leg or attaching ribs to some parts, when the creep deformation due to load in the horizontal direction is more than the extent specified in the guideline. Such improvement in the material strength may be applied not only to the legs but also to the other parts, if necessary. The flat plate 31 shown in Fig. 8 is formed in the square shape in the schematic plan view, it is not limited to square, and the other shape, such as rectangular and combination of square and rectangular, are also applicable.

### [Description of Reference Numerals]

1: Rainwater storage/infiltration facility
11: First stage unit members group
12: Second stage unit members group
13: Third stage unit members group
21: Unit member A
22: Unit member B
23: Unit member C1
24: Unit member C2
31: Flat plate
311: One side
312: The other side
32, 33: Leg
321: Engaging convex portion
331: Engaging concave portion
34: Contact surface
35: Engaging portion
36: Engaged portion
37: Flat plate
371: One side
372: The other side
38: Flat plate
381: One side
382: The other side
39: Through hole
4: Inspection port
51: Cover member A
52: Cover member B
53: Cover member C
54: Cover member D
55: Lateral side cover member A
56: Lateral side cover member B
61: Flat plate
611: One lateral side
612: The other lateral side
64: Contact surface
65: Engaging portion
66: Engaged portion
67: Flat plate portion
671: One lateral side
672: The other lateral side
68: Flat plate
681: One lateral side
682: The other lateral side
71: Bottom plate
72: Flange
73, 84: Covered soil
74: Hollow cylindrical structure
75: Lid
81: Flat plate
811: One lateral side
812: The other lateral side
813: Contact surface
814: One end face
815: The other end face
82: Engaging portion
83A, 83B: Contact projection
84A, 84B: Inclined contact surface
841B, 842B: Engaging groove
843B, 844B: Engaging projection
845B, 846B: Engaging portion
841A, 842A: Engaging projection
843A, 844A: Engaging groove
845A, 846A: Engaging hole
85: Flat plate
851: One lateral side
853: The other lateral side
854: One end face
855: The other end face
86A, 86B: Inclined contact surface
861B, 862B: Engaging groove
863B, 864B: Engaging projection
865B, 866B: Engaging portion
861A, 862A: Engaging groove
863A, 864A: Engaging projection
865A, 866A: Engaging portion

## Claims

1. A rainwater storage/infiltration facility for creating space to storage rainwater structured by assembling a plurality of unit members in both horizontal and vertical directions and placing the assembled unit members under the ground **characterized in that**
the unit member comprises:
an either square or rectangular flat plate having a given thickness,
connecting portions formed on four corners of one side of the flat plate and provided with contact surfaces adapted to connect to four corners of the flat plate of the other unit member, and
hollow cylindrical legs integrally formed with the flat plate on four corners of said flat plate, projecting toward the other side of said flat plate and being opened to said one lateral side.

2. The rainwater storage/infiltration facility of Claim 1 **characterized in that**
said contact surfaces are rectangular concave bottom surfaces each having been formed thin in the thickness to half the thickness of said flat plate and extending from said one side to said other side, and two sides adapted to contact to lateral sides of any of the four corners of the flat plate of the other unit member.

3. The rainwater storage/infiltration facility of Claim 2 **characterized in that**
the connecting portion is provided with the engaging portion and the engaged portion for engaging with the connecting portions of the other unit member,
the tip portions of the legs positioning at the diagonal positions of the flat plate consist of a projecting convex portion and a projecting concave portion for connecting with the legs of the other unit member, and
the leg is formed in either round or truncated pyramid shape, and the diameter of the leg is made to be gradually reduced in the direction of from said one side toward said other side.

4. The rainwater storage/infiltration facility of Claim 3 **characterized in that**
the convex portions and the concave portions of the legs are connected to structure a pair of unit members, the engaging portions, the engaged portions and the contact surfaces of said pair of unit members and the other pair of unit members are engaged and assembled alternately in the horizontal direction and the vertical direction and followed by placing the assembled unit members under the ground to construct the rainwater storage space.

5. The rainwater storage/infiltration facility of Claim 4 **characterized in that**
the top portion of the inspection port, embedded in the covered soil laid over the top stage unit members group and formed between the sides of the flat plates of the adjacent top stage unit members, and the earth surface are connected, and
the hollow structure, into which an inspection camera may be inserted through the inspection port, is provided to the facility.

6. The rainwater storage/infiltration facility of Claim 4 **characterized in that** the inspection manhole connected to the ground is provided by removing the unit members in the vertical direction to form cylinder-shaped space extending from the top surface of the top stage unit members group up to the ground.
